# EUROPEAN PATENT APPLICATION

(11) **EP 2 589 940 A1**
(43) Date of publication of application: **08.05.2013**
(21) Application number: 11801209.5
(22) Date of filing: 07.06.2011
(51) Int. Cl.: G01J 3/26

(54) **STATIC FOURIER SPECTROMETER**

(30) Priority: 02.07.2010 RU 2010128321
(71) Applicant: Stroganov, Alexander Anatolyevich, St.Petersburg 196135 (RU); Belash, Alexandr Olegovich, St.Petersburg 197349 (RU); Bogachev, Dmitrii Lvovich, St.Petersburg 197349 (RU); Senichenkov, Vasilii Andreevich, St.Peteresburg 195027 (RU)
(72) Inventor: Stroganov, Alexander Anatolyevich, St.Petersburg 196135 (RU); Belash, Alexandr Olegovich, St.Petersburg 197349 (RU); Bogachev, Dmitrii Lvovich, St.Petersburg 197349 (RU); Senichenkov, Vasilii Andreevich, St.Peteresburg 195027 (RU)
(74) Representative: Sloboshanin, Sergej
(86) International application number: PCT/RU2011/000403
(87) International publication number: WO 2012/002839

(57) **Abstract**

The reported invention belongs to spectral interference devices and can be used for spectral research in various fields of technology.

The objective of the present invention is to improve the optical characteristics of the spectrometer in which reduced loss of light from the radiation object on aberration is attained with a minimum number of optical elements produced at lower costs.

The objective is achieved by the fact that the static Fourier spectrometer contains an input collimator optically coupled with the interferometric unit consisting of a beam splitter and at least two mirrors installed with the ability to create an interference image localized in the plane of the mirrors, and an image recording device optically coupled with the interferometric unit by means of the projective system with the ability to project the figure of the indicated interference image on the image recording device. Besides, the projective system includes a spherical mirror and an objective lens centered against the normal line to the optical surface of the mirror. The mirror and the objective lens are produced to enable optical radiation to pass through the objective lens from the interferometric unit to the spherical mirror, being reflected from it and passing through the same objective lens to the recording device. 4IL.

## Description

The claimed invention pertains to interference spectral devices and can be used for spectral research in various fields of technology.

Fourier spectrometers are widely used in spectral research due to high luminosity (Zhakino gain), high-speed performance and ability of simultaneous registration of the entire radiation spectrum of the range under investigation [1]. Fourier spectrometers comprise the following basic functional units: a system of forming an input light beam (hereinafter - an input collimator), an interferometric unit, a projective system, a recording device.

In dynamic Fourier spectrometers various modifications of the classic Michelson interferometer comprising a semitransparent reflector (a beam splitter) and two reflectors (or retroreflectors), one of which is movable and provides variable optical path difference are most often used as an interferometric unit. When moving the movable reflector periodical illumination alteration takes place in the plane of recording, and so modulation of each wavelength of incoming radiation spectrum occurs, with modulation frequency being in inverse proportion to wavelength. Metrological parameters of dynamic Fourier spectrometer (e.g. signal-to-noise ratio) depend on modulation depth, depending in its turn on movement steadiness and parallelism of moving the interferometric unit reflectors. When operating Fourier spectrometers external vibrations influence the steadiness of the reflectors movement that limits ability of using dynamic Fourier spectrometers under conditions of strong vibrations.

The special feature of static Fourier spectrometers is realization of spatial decomposition of interference image in the plane of recording device along one of coordinates. Advantages of static Fourier spectrometers over dynamic ones are absence of movable structures, linear motors and comparatively complex control systems that gives opportunity to create compact vibration resistant spectrometer and to lower costs in its production. Modulation depth in static Fourier spectrometers depends on quality of picture transfer that is determined by frequency and contrast characteristics of the projective system and decreases with increase of aberrations in projective system. Decrease of modulation depth worsens metrological parameters of static Fourier spectrometer (signal-to-noise ratio). Hence improvement of metrological parameters of static Fourier spectrometers is primarily associated with minimization of losses of projective system.

In known static Fourier spectrometers [Patent No.6222627; Patent No. 6930781; US Patent No.7092101] the tasks of image transfer by projective system with correction of many types of aberrations are constructively solved by increasing the number of refracting and reflecting surfaces in an optical system and by using aspherical surfaces.

In the static Fourier spectrometer according to [Patent No.6222627] an interferometric unit is produced on the basis of doubly refracting crystal (referred to as Wollaston prism according to [Patent No. 6222627]), with a projective system including several lenses located sequentially. A multiple-unit diode ruler is used as a device of image recording. The main disadvantage of this device is dependence of spectrometer optical parameters on material and geometric size of polarization crystal used for obtaining an interference image that results in limitations in spectral resolution due to dependence of path difference on wavelength. Another disadvantage is losses on spherical and chromatic aberrations that are aided by sequentially located lenses in the projective system.

In the static Fourier spectrometer according to [Patent No.6930781] a scheme with transverse shift of interfering rays is employed as an interferometric unit (referred to as San'yak interferometer according to [Patent No.6930781]).

The main disadvantage of this device is technical complexity of qualitative projection and focusing of image obtained by the interferometric unit of this type with minimum light losses. In such case interference image is located on infinity that requires realization in the Fourier spectrometer a projective system comprising optical elements with aspherical surface that reduces processability in production and increases cost.

The closest to the claimed invention in the set of significant features is device [US Patent No.7092101] in which an interferometric unit comprising a beam splitter and two reflectors producing an interference image in the plane of one of reflectors is realized according to the Michelson interferometer scheme. An input collimator optically connected with the interferometric unit consists of a diaphragm and an objective. Picture of the indicated interference image is projected on an image recording device by means of a projective system optically connected with the image recording device.

The main disadvantage of this device when studying radiation of extended object is transfer of the interference image picture by the projective system comprising a sequence of lens components to the recording device. In this device decrease of aberrations is provided due to increase of the number of lenses, that in its turn increases the spectrometer dimensions and production costs.

For polychromatic radiation in most of the considered devices the task of transfer of interference image picture is solved by projective systems comprising consecutively located lens components with axial rays path. This results in losses of resolving capacity concerned with chromatic and spherical aberrations. When transferring the interference image picture obtained for extended object losses concerned with astigmatism and field curvature appear. This significantly reduces the quality of the picture projected on the image recording device and therefore worsens metrological parameters of spectrometer. In projective systems consisting only of consecutively located lenses technological solutions for simultaneous compensation of different types of aberrations lead to increase of the number of lenses and dimensions resulting in increase of production costs.

The task of this invention is improvement of optical parameters of the spectrometer in which light losses decrease when transferring picture on aberrations is attained at the minimum number of optical elements produced with reduced costs.

The set task is achieved in that a static Fourier spectrometer contains an input collimator optically connected with an interferometric unit comprising a beam splitter and at least two reflectors installed with the ability to create an interference image localized in the reflectors plane, and an image recording device optically connected with the interferometric unit by means of a projective system with the ability to project the indicated interference image picture on the image recording device, with the projective system comprising a spherical reflector and a lens objective centered relative to the normal line to the optical surface of the reflector, with the reflector and the lens objective being made with ability of optical radiation to pass through the lens objective from the interferometric unit to the spherical reflector with reflection from it and passing through the same lens objective to the recording device.

The suggested set of features of the static Fourier spectrometer allows to attain minimum radiation losses with high quality of transfer of the interference image picture to the recording device due to elimination of spherical and chromatic aberrations and astigmatism due to the best combination of minimum number of optical elements of the projective systems preferably of spherical shape.

In the projective system for correction of chromatic aberrations at noncomplanarity of interference image plane and interference image picture plane a composite lens objective is used, comprising at least two lenses made of different materials and connected by an optical contact, with one of lenses being made planoconvex and the second lens connected with it being made in the meniscus form.

For providing vibration stability the interferometric unit is made as two glass rectangular prisms glued by hypotenuse faces one of which is coated with beam splitting cover, with the reflectors being made on one of the cathetus surfaces in each prism for minimization the number of optical elements, and the prisms being glued so that the faces with the reflectors are adjacent faces of the polyhedron resulting from the gluing, with one of the prisms of the interferometric unit being connected with the lens objective of the projective system by an optical contact for providing the equal conditions of rays passage coming from the interferometer reflecting faces to the spherical reflector and rays coming from the spherical reflector to the recording device.

The projective system comprises a compensator located between the lens and the recording device and connected with the lens objective by the optical contact for providing vibration stability, with the compensator being made of the same material that the prisms of the interferometric unit for equality of optical path lengths in the compensator and in the interferometric unit.

The compensator is made in the form of isosceles rectangular prism with reflecting cover on hypotenuse face for providing portability, with the recording device being located perpendicular to the plane of one of the reflecting faces of polyhedron of the interferometric unit.

The claimed device is explained by the following drawings:
Fig. 1 shows functional scheme of the static Fourier spectrometer (section in the plane of the radiation object).
Fig. 2 shows the Fourier spectrometer scheme (section in the plane of the image recording device).
Fig. 3 shows the static Fourier spectrometer (axonometry).
Fig. 4. shows the interferometric unit of the static Fourier spectrometer.
Fig. 5 shows formation of path difference in the interference unit of the Fourier spectrometer.
Fig. 6 shows interfering beams on the plane of interference observation.
Fig. 7 shows rays path in the projective system with correction of chromatic aberration.
Fig. 8 shows rays path with correction of field aberrations.

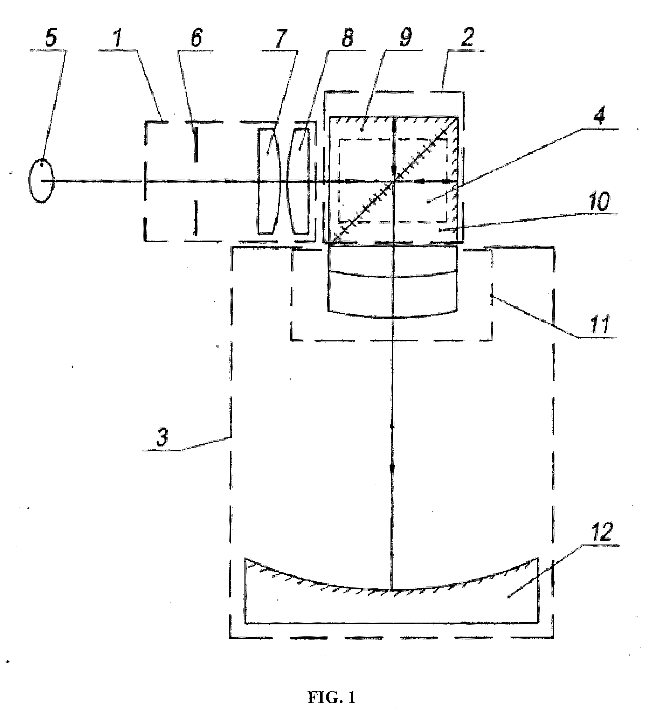

The static Fourier spectrometer according to Fig. 1 - 3 consists of the input collimator 1 optically connected with the interferometric unit 2, the projective system 3 and the image recording device 4.

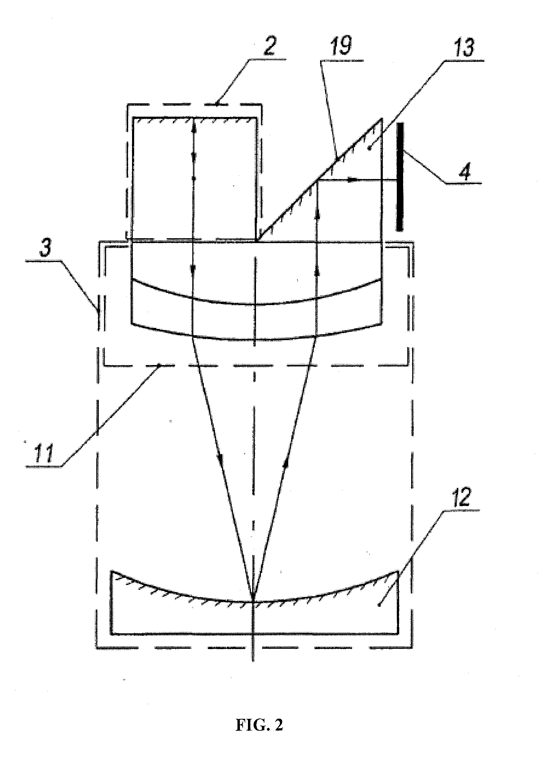

The input collimator 1 directs radiation from analyzed object 5 to the interferometric unit 2. The input collimator may contain a diaphragm and a system consisting of several lenses. In this case, to provide uniformity of reflectors illumination and minimum required for optical coordination number of scheme elements it is made in the form of the diaphragm 6 and two lenses 7 and 8. The interferometric unit 2 can be made of separate reflectors according to the classic scheme of the Michelson interferometer. The interferometric unit 2 as shown in Fig.1 is realized in the form of two rectangular isosceles prisms 9 and 10 made of the same material (with the same values of refraction index n) and glued in an effort to increase vibration stability and to minimize production costs. According to Fig.2 one of the hypotenuse faces 16 is coated with reflecting cover having reflective index close to 50% (preferably within the range of 40% to 60% ) with formation of a beam splitter, with reflecting covers (preferably with reflective index of more than 95%) being made on the cathetus surfaces 17 and 18 of each prism 9 and 10. In other versions it's possible to use separate adjustable reflectors located in close proximity to cathetus surfaces of the prisms; however realization of reflecting covers on the indicated surfaces provides vibration resistance and minimization of production costs. The interferometric unit 2 and the projective system 3 are optically coordinated so that directed to the interferometric unit 2 light beam divides on the face 16, reflects from the reflecting surfaces 17 and 18 of the prisms 9 and 10 and then comes to the lens objective 11.

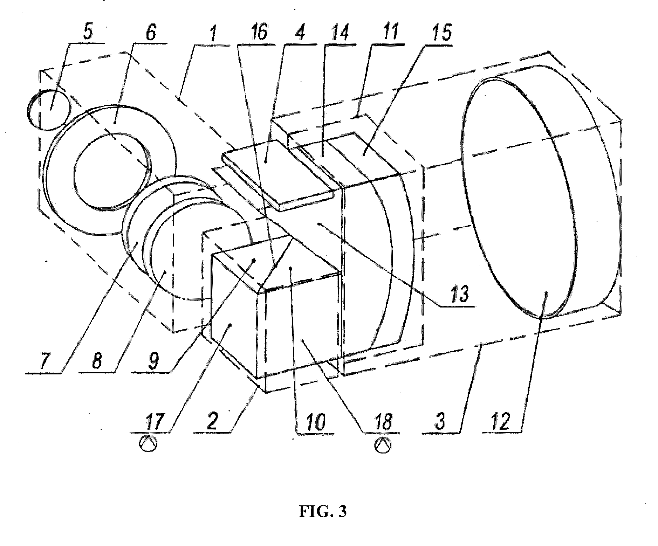

The projective system 3 comprises the spherical reflector 12 enabling to decrease light losses in chromatic aberrations, the lens objective 11 (doublet) and the compensator 13 located as shown in Fig. 3 between the lens objective 11 and the image recording device 4. The compensator 13 connected with the lens objective 11 by the optical contact is made of the same material that the prisms 9 and 10 of the interferometric unit 2.

The recording device 4 is performed in the form of a multi-element receiver (e.g. CCD or CMOS) that allows to improve energetic and metrological parameters of recording, including signal/noise, detection threshold and measurement time. In other versions the image recording device 4 can be produced as a scanning photoreceiver, such as a Vidicon.

The compensator 13 as shown in Fig. 3 is made in the form of rectangular prism with reflecting cover on the hypotenuse face 19 and is installed on the lens objective 11 so that light beam reflected from the reflector 12 and passed back through the lens objective 11 enters into the first cathetus face of the prism compensator 13, reflects, and comes from the hypotenuse face to the image recording device 4. To unify details and to increase assembly processability the compensator 13 is made in the form of prism identical to one of the prisms 9 or 10 of the interferometric unit 2, with optical path length in the compensator 13 being equal to optical path in the prisms 9 and 10 of the interferometric unit 2.

The lens objective 11 as shown in Fig. 2 of the projective system 3 is connected by the optical contact with the interferometric unit 2, that increases vibration stability of such system and excepts necessity of using adjustable elements in the device, providing its portability. The lens objective 11 is made of two lenses, with one of lenses being planoconvex 14, and the other 15 being made in meniscus form and is connected with the first one, with curvature radius of concave surface of the lens 15 coinciding with curvature radius of convex surface of the planoconvex lens 14, that enables to correct spherical aberrations. Lenses 14 and 15 are made of different glass grades, with differing refraction indexes n for correction of chromatic aberration of position, with the lens 14 being made of glass with a higher refraction index n. Connection of lenses 14 and 15 lowers light losses on the optical contact surfaces as a result of gluing and simplifies structural task of fastening the lens objective 11.

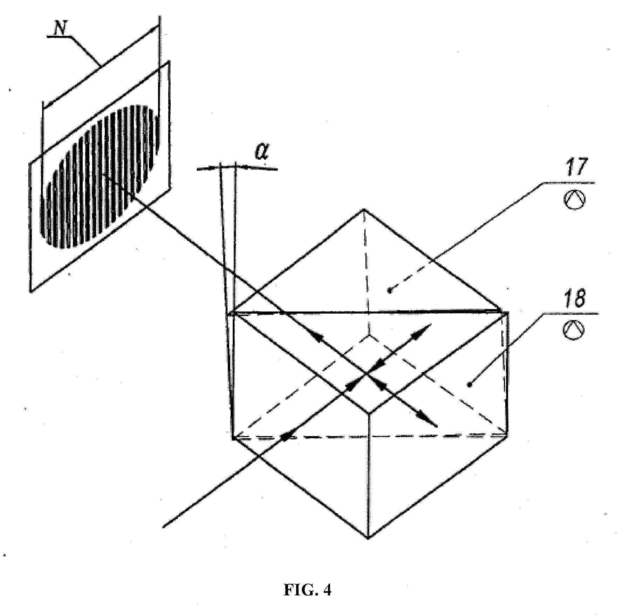

To obtain interference image the prisms 9, 10 of the interferometric unit 2 as shown in Fig. 4 are turned relative to each other around the axis perpendicular to gluing plane on α angle and are glued together so that for passing in the interferometric unit 2 rays variable optical path difference appears along one of the coordinates in the plane of cathetus face, as a result of this interference image in the planes of the reflecting surfaces 17 and 18 of the prisms 9 and 10 is observed in the form of sequence of dark and light bands. The faces with reflecting covers 17 and 18 as shown in Fig. 4 are adjacent faces of polyhedron resulting from the gluing.

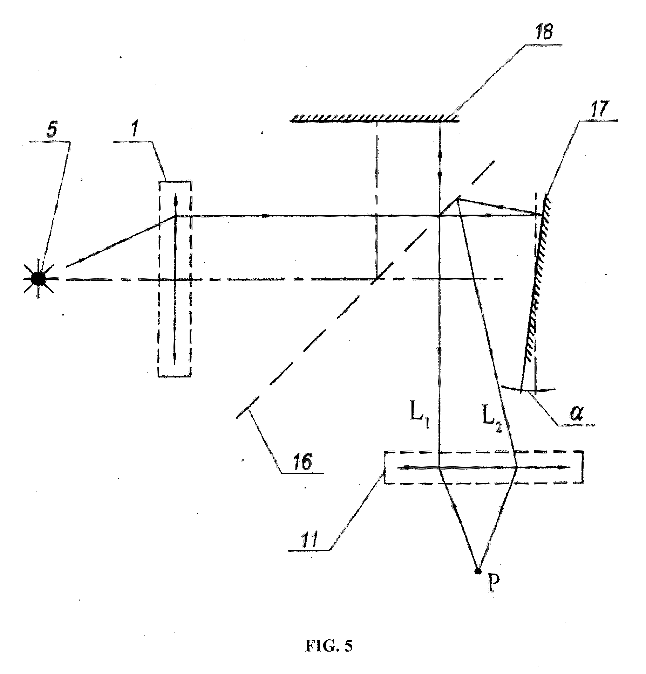

The device operates as follows. Optical radiation from the object under analysis 5 enters to the static Fourier spectrometer through the input collimator 1 coordinated with the projective system 3 by aperture. The input collimator converts radiation from each point of the object 5 into beam close to parallel one, and directs the obtained beam to the interferometric unit 2, providing uniformity of illumination of working area of reflecting surfaces of the prisms 9 and 10 of the interferometric unit 2. The beam is divided on the beam splitter 16 (Fig. 5). Each part of the divided beam passes along its path with reflection from the reflecting faces 17 and 18.

Due to variable path difference Δl (x) interference of rays and formation of two-dimensional interference image in the planes of the reflecting faces 17 and 18 of the prisms 9 and 10 appear. By means of the projective system 3 optically coordinated with the input collimator 1 and interferometric unit 2, as well as by means of the compensator 13 picture of the obtained interference image is projected on the image recording device 4.

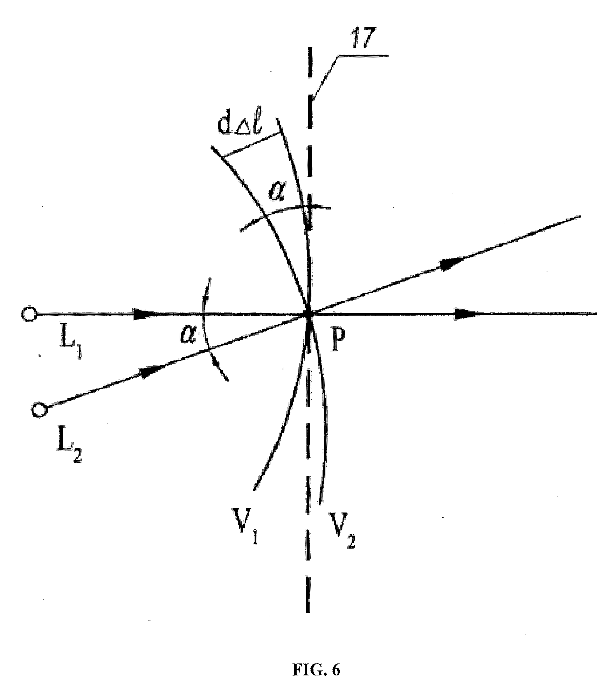

The spectral resolution of the static Fourier spectrometer is determined by transfer quality of interference image and by spatial frequency N of resolved interference bands of its picture on the recording device 4 (Fig.6). Path difference Δl depends linearly on x coordinate along interference image in the plane of reflecting surfaces of the prisms 9 and 10, and also on mutual turn α angle. In small-angle range, dependence is expressed by formula Δl(x) = 2αx, i.e. path difference of rays Δl increases as turn angle α of the prisms 9 and 10 increases. As shown in Fig. 6 in each P point of the interference image plane (e.g. the reflecting surface 17 of the prism 9) for two interfering rays L1 and L2 under α angle to each other increment of path difference dΔl varies from one band to another along the line of intersection of the wave surfaces V1 and V2 (the line of intersection of the wave surfaces is perpendicular to the plane, Fig. 6). Spatial frequency N of interference bands for the fixed linear field of interference for small angles according to formula N =2α/λ decreases with radiation wavelength λ from the object 5 increases and is determined by α angle at the fixed wavelength λ. So on radiation wavelength λ = 1 um when using the rectangular prisms 9 and 10 with 40 mm hypotenuse face the value of turn angle α of the prisms relative to each other is approximately 20 angular minutes; with the number of interference bands being 200 in linear field of the recording device with dimensions 20 X 20 mm.

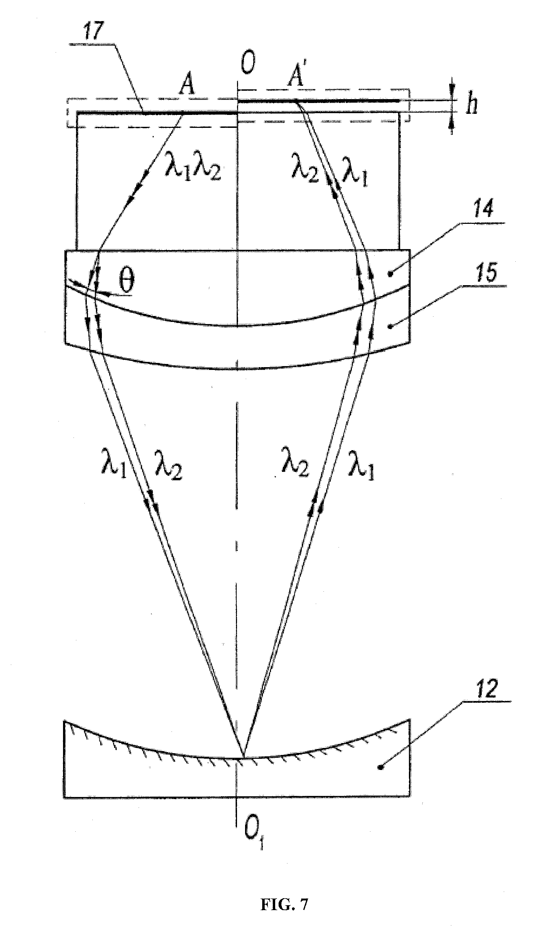

Absence of chromatic aberrations of increase is provided by employing a reflecting element, i.e. the spherical reflector 12 in composition of the projective system 3. Chromatic aberrations of position arising in the case of divergence from system's symmetry, e.g. shift of recording plane M'A' in picture as shown in Fig. 7 for h distance from plane of interference image MA formation, are corrected by gluing the lenses 14 and 15 produced from different glass grades. At the same time the lens 14 is made of glass with higher value of refraction index n, than that of the lens 15. Rays coming from point A of interference image located in the plane of the reflecting face 17 of the prism 9, separate on respective angle θ depending on wavelength λ as a result of refraction. After reflection from the spherical reflector 12 rays pass through the same lens objective 11, as a result compensation of initial deviation to θ angle occur. Rays λ1 and λ2 gather in A' point of the image recording plane. Elimination of chromatic aberration of position provides better frequency and contrast characteristic of projective system, and thus better metrological parameters (resolution, signal-to-noise ratio) of the static Fourier spectrometer.

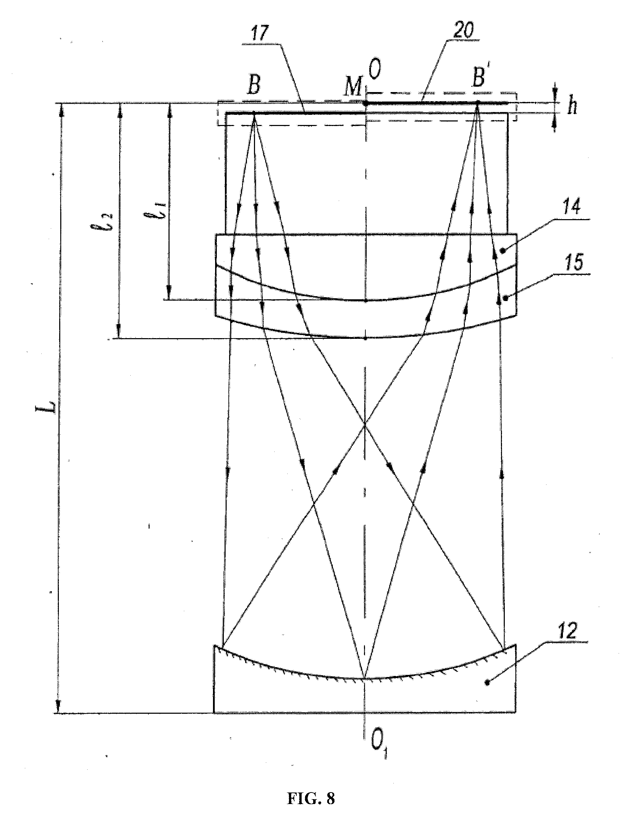

Monochromatic aberrations correction is provided by optical coordination of the interference unit 2 and the projective system 3. Object of transfer is interference image generated on reflecting faces of the prisms 9 and 10. Using of the spherical reflector 12 in the projective system 3 makes it possible to represent object located in the center of its curvature without spherical aberration at any aperture angles of beam. Using of the lens objective 11 as a correcting element of optical scheme of the projective system 3 provides elimination of aberrations of image field curvature in meridional section for interference image points outside optical axis OO₁ as shown in Fig. 8 (e.g. B and B'). Using the composite lens objective 11 comprising two lenses 14 and 15 with different refraction indexes enables compensation of noncomplanarity of the reflecting plane 17 and the recording plane 20 M'B', expressed in h shift. For points of interference image generated in the plane of the reflecting surface 17, such solution allows to correct astigmatism arising in cases with for point B lying outside optical axis OO₁. This in its turn increases image quality of B' in the recording field 20 M'B'. To unify employed optical elements and to ensure compact location the image recording device 4 is located perpendicularly to the plane of the reflecting surface 17 of the prism 9 and picture of interference image is transferred to the recording device 4 by using the compensator 13.

The claimed invention provides high values of luminosity and modulation index when obtaining a two-dimensional interference image, transfer of its figure with minimum losses at the best combination of minimum number of optical elements used, due to structural realization of interferometric unit and projective system coordinated with compensator, connected into a single module by optical contact.

## Claims

1. A static Fourier spectrometer containing an input collimator (1) optically connected with an interferometric unit (2) comprising a beam splitter and at least two reflectors installed with the ability to create an interference image localized in the reflectors plane, and also a recording device (4) optically connected with the interferometric unit (2) by means of a projective system (3) with the ability to project the indicated interference image picture on the recording device (4), wherein the projective system (3) comprises a spherical reflector (12) and a lens objective (11) centered relative to the normal line to the optical surface of the reflector (12), with the reflector (12) and the lens objective (11) being made with the ability of optical radiation to pass through the lens objective (11) from the interferometric unit (2) to the spherical reflector (12) with the reflection from it and passing through the same lens objective (11) to the recording device (4).

2. The Fourier spectrometer according to the Claim 1, wherein the lens objective (11) comprises at least two lenses (7, 8) made of different materials and connected by an optical contact, with one of the lenses being made planoconvex and the second lens connected with it being made in the meniscus form.

3. The Fourier spectrometer according to the Claim 1, wherein the interferometric unit (2) is made as two glass rectangular prisms (9,10) glued by hypotenuse faces (16) one of which is coated with beam splitting cover, with the reflectors being made on one of the cathetus surfaces (17,18) of each prism (9,10) and the prisms (9,10) being glued so that the faces with the reflectors are adjacent faces of the polyhedron resulting from the gluing, with one of the prisms of the interferometric unit (2) being connected with the lens objective (11) of the projective system (3) by an optical contact.

4. The Fourier spectrometer according to the Claim 3, wherein the projective system (3) comprises a compensator (13) located between the lens objective (11) and the recording device (4) and connected with the lens objective (11) by the optical contact, with the compensator (13) being made of the same material that the prisms (9, 10) of the interferometric unit (2) , so that the optical path length in the compensator (13) is equal to the optical path in the interferometric unit (2).

5. The Fourier spectrometer according to the Claim 4, wherein the compensator (13) is made in the form of rectangular prism with reflecting cover on the hypotenuse face.
